# EUROPEAN PATENT APPLICATION

(11) **EP 2 230 591 A2**
(43) Date of publication of application: **22.09.2010**
(21) Application number: 10150579.0
(22) Date of filing: 12.01.2010
(51) Int. Cl.: G06F 3/048, G06F 3/01, G06F 3/045

(54) **Operation input device**

(30) Priority: 19.03.2009 JP 2009068559
(71) Applicant: SMK Corporation, Tokyo 142-8511 (JP)
(72) Inventor: Nakanishi, Noriyuki, Tokyo 142-8511 (JP); Mizuki, Takayuki, Toyama 939-2366 (JP)
(74) Representative: Michalski Hüttermann & Partner Patentanwälte

(57) **Abstract**

Provided is an operation input device having a first substrate, a first conductive film provided on the first substrate, a second substrate that is provided opposing the side of the first conductive film on the first substrate and have flexibility to be deformed according to pressing strength applied to the film, a second conductive film that is provided on the second substrate at a side opposing the first substrate, and a spacer provided on the first conductive film at the side opposing the second conductive film. The resistance value between the first conductive film and the second conductive film varies according to a contact area between the films.

## Description

### BACKGROUND

### 1. TECHNICAL FIELD

The present invention relates to operation input devices.

### 2. RELATED ART

One of the conventional technologies is a tablet apparatus having a vibration mechanism. Refer to Japanese unexamined patent application publication number 2005-222326, for example.

Since the conventional technology can detect only whether an operator has executed the pressing operation, the technology cannot offer various user interfaces.

### SUMMARY

The first aspect of the present invention is an operation input device that possesses a first substrate, a first conductive film provided on the first substrate, a second substrate that is provided opposing the side of the first conductive film on the first substrate and having flexibility to be deformed according to pressing strength applied thereto, a second conductive film that is provided on the second substrate at a side opposing the first substrate, and a spacer provided on the first conductive film at the side opposing the second conductive film. The resistance value between the first conductive film and the second conductive film varies according to a contact area therebetween.

The operation input device may further possess a position calculation part to calculate a contact position between the first conductive film and the second conductive film based upon a potential of the second conductive film, when the first conductive film comes into contact with the second conductive film while voltage is applied to both ends of the first conductive film, which is a resistant film.

The operation input device may further possess an operation processing part that executes processing of different operation functions depending on the resistance value between the first conductive film and the second conductive film when the films come into contact with each other.

The operation input device may further possess a judgment part that judges whether the resistance value conforms to a first condition or a second condition when the first conductive film and the second conductive film come into contact with each other. The operation processing part may execute the processing of the different operation functions depending on the conformity result of the resistance value with respect to the first condition and the second condition.

The operation processing part may allocate one or more of the operation functions to a position corresponding to the contact position that the position calculation part calculated when it is judged that the resistance value conforms to the first condition, and may execute processing of the operation function allocated to the position corresponding to the contact position when it is judged that the resistance value conforms to the second condition while the one or more operation functions are allocated.

The operation input device may further possess a display part that is provided substantially in parallel with the first substrate. The operation processing part may display one or more display objects that correspond respectively to the one or more operation functions at a position on the display part corresponding to the contact position that the position calculation part calculated when it is judged that the resistance value conforms to the first condition.

The judgment part may judge that the resistance value conforms to the first condition when the resistance value exceeds a predetermined first threshold value. The judgment part may judge that the resistance value conforms to the second condition when the resistance value exceeds a predetermined second threshold value that is larger than the first threshold value.

The operation input device may further possess a vibration part that vibrates the second substrate, and the operation processing part may cause the vibration part to vibrate with different vibration properties depending on the conformity result of the resistance value to the first condition and the second condition. The operation processing part may cause the vibration part to vibrate with different vibration properties depending on the conformity result of the resistance value to the first condition and the second condition.

The summary of the invention mentioned above does not enumerate all the necessary features of this invention. Moreover, sub-combinations of these characterizing groups can be inventions, too.

### BRIEF DESCRIPTION OF THE DRAWINGS

Fig. 1 shows an example of the operation input system 10 in accordance with an embodiment.

Fig. 2 shows an example of a functional block diagram of the navigation device 100.

Fig. 3 shows an example of the figure of screen transition displayed in the input part 262.

Fig. 4 shows an example of the processing flowchart when the operator executes the pressing operation.

Fig. 5 shows an example of the data in the table form stored in the threshold value storage part 22.2

Fig. 6 shows an example of the data in the table form stored in the key owner storage part 230.

Fig. 7 schematically shows an example of the method to specify the operator based upon the pressing strength.

Fig. 8 shows another example of the figure displayed in the input part 262.

Fig. 9 is a figure that shows the range of pressing point to be able to display the function selection menu 314.

Fig. 10 shows an example of the input device 260 together with the example of the vibration part 272 and the display part 274.

Fig. 11 shows the cross-section view of the input device 260.

### DESCRIPTION OF EXEMPLARY EMBODIMENTS

Hereinafter, this invention is explained through the form of embodiment of the invention. However, the following embodiment does not limit the invention related to the claims. Moreover, all the combinations of features explained in the embodiment are not necessarily indispensable to the means for solving the problems of the invention.

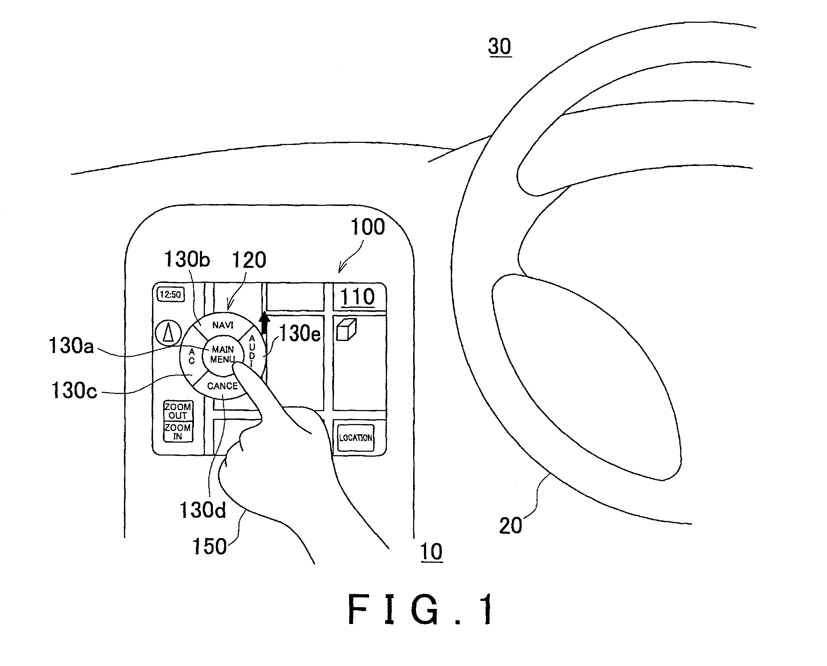

Figure 1 shows an example of the operation input system 10 in accordance with an embodiment.

In the operation input system 10, the operation input device in this invention is mounted in the shape of installation into the navigation device 100 for the vehicle. The operation input device in this invention offers the touch panel function in the navigation device 100 as explained through this embodiment in the following manner.

The navigation device 100 can display not only the navigation data, the navigation setting menu to navigate the operation of the vehicle, but also an air conditioner operation menu to operate an air conditioner device possessed in the vehicle, an audio operation menu to operate an audio device possessed in the vehicle, the menu that relates to vehicle operation, etc. As a menu that relates to the vehicle operation, a window operation menu to raise and lower the windows of vehicle, a suspension setting menu to set the suspension to the soft stage or the hard stage etc. can be illustrated. The navigation device 100 has input/output part 110 where the operation input by the operator is received as well as displays the information mentioned above. The navigation device 100 possesses a function to detect the operation input by the operator's finger 150 at the input/output part 110, and a function to detect the position where an operation input was executed. And the navigation device 100 can execute prescribed processing according to the position where the input operation was executed and the contents input by the finger 150.

The navigation device 100 is assumed, for instance, to display the navigation screen in the input/output part 110 while standing by the operation input by the operator. When the operator presses the input/output part 110 with the finger 150, the input/output part 110 displays function selection menu 120 to a surrounding area centered on the presses position on the input/output part 110. And, the navigation device 100 notifies the operator of displaying the function selection menu 120 by making the input/output part 110 vibrated.

The function selection menu 120 contains a plurality of function buttons from 130a to 130e. The following buttons are included in function button 130: a function button 130a for the main menu display, a function button 130b for the car navigation setting, a function button 130c for the air conditioner setting, a function button 130d for the cancellation to return to default screen, and a function button 130e for the audio setting.

The operator can select the preferable function button 130 through sliding the finger 150 while touching the input/output part 110, when the function selection menu 120 is displayed.

The navigation device 100 executes the function corresponding to the selected function button 130 by executing a prescribed touch operation while sliding the finger 150 to the preferable function button 130. For instance, the navigation device 100 displays the menu that sets the air conditioner in the input/output part 110 when the operator strongly presses the function button 130c by finger 150, detaches the finger 150 from the navigation device 100 on the function button 130c, or presses the function button 130c two times like the tap operation.

Here, the navigation device 100 gives vibrations, with the vibration property corresponding to the function button 130 in the moving destination, to the input/output part 110, when the navigation device 100 detects that the operator's finger 150 has moved from one function button 130 to another function buttons 130. For instance, each of the function button 130 is allocated with a different vibration patterns from each other. And, the navigation device 100 vibrates the input device 260 with the vibration pattern corresponding to the air conditioner setting function when the navigation device 100 detects that the operator's finger 150 has moved onto the function button 130c.

Therefore, the operator can easily judge on which button the finger 150 is located without gazing at the input/output part 110.

In addition, the operator can select the function corresponding to the preferable function button 130 by sliding the finger 150 in the direction where the function button 130 corresponding to the function to be executed is displayed, when the operator wishes to execute a certain function.

For instance, the navigation device 100 can detect the direction of the slide of the finger 150. And the navigation device 100 may execute the function corresponding to the detected direction of the slide when the operator executes a prescribed touch operation. As a result, a different function from that of the function button 130, at the position of the finger 150 on the timing when a prescribed touch operation is made, may sometimes be executed. The operator sometimes cannot recognize on which function button 130 the finger 150 is actually located, when the operator is moving the finger under touch typing. The function that conforms to the operator's intention can sometimes be selected more adequately by selecting the function according to the direction of the finger slide.

As explained above, the navigation device 100 vibrates the input/output part 110 by the vibration pattern corresponding to each function button 130 as well as displays the function selection menu 120 at the position on which the operator has touched. As a result, the operator can select a function of his intention by moving the finger 150 relatively from the input/output part after touching the input/output part. Moreover, the operator can recognize from the vibration pattern on which function button the operator's finger 150 is located. Therefore, the operator can easily select the function of his intention without gazing at the input/output part 110, or in some cases without seeing it at all.

In this figure, the navigation device 100 was explained so that it possesses the image display function to display the function selection menu 120 on the screen and the input function, however, the navigation device 100 may display the function selection menu 120 by projecting to the windshield 30 of the vehicle. Moreover, the image display function and the operation input function may be provided separately. The operation input function may be provided in other places than the navigation device 100, for instance, at the steering wheel 20. And, the image display function may be provided in the navigation device 100.

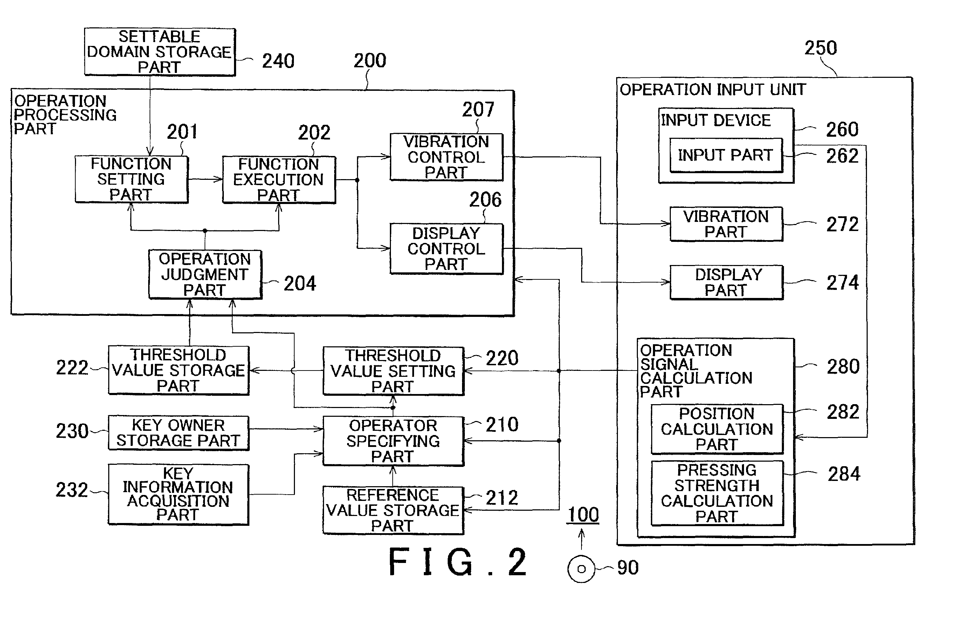

Figure 2 shows an example of a functional block diagram of the navigation device 100. The navigation device 100 comprises an operation processing part 200, a settable domain storage part 240, a threshold value storage part 222, threshold value setting part 220, an operator specifying part 210, a reference value storage part 212, a key owner storage part 230, a key information acquisition part 232, and an operation input unit 250. The operation processing part 200 comprises a function setting part 201, a function execution part 202, an operation judgment part 204, a vibration control part 207, and a display control part 206.

The operation input unit 250 comprises an input device 260, a vibration part 272, a display part 274, and an operation signal calculation part 280. The input device 260 includes an input part 262.

The operation signal calculation part 280 includes a position calculation part 282, and a pressing strength calculation part 284. The operation input unit 250 receives the operation input from the operator. The input/output part 110 explained in relations to Fig. 1 may be a part of the domain of the input part 262. In the following explanations, it is assumed that the domain operable by the operator and the domain where the image can be offered to the operator are approximately the same in the input/output part 110. Therefore, in the following explanations, it is assumed that to display in the input/output part 110 is to display in the input part 262.

At first the operation of each part of navigation device 100 is explained in the outline. The operation input unit 250 outputs the operation signal that shows the pressing point and the pressing strength by the operator. The operation processing part 200 acquires the operation signal and displays the function selection menu 120 in the display part 274 corresponding to the pressing point and the pressing strength, in addition, executes other various functions. Moreover, the operation processing part 200 can vibrate the input device 260 by vibrating the vibration part 272.

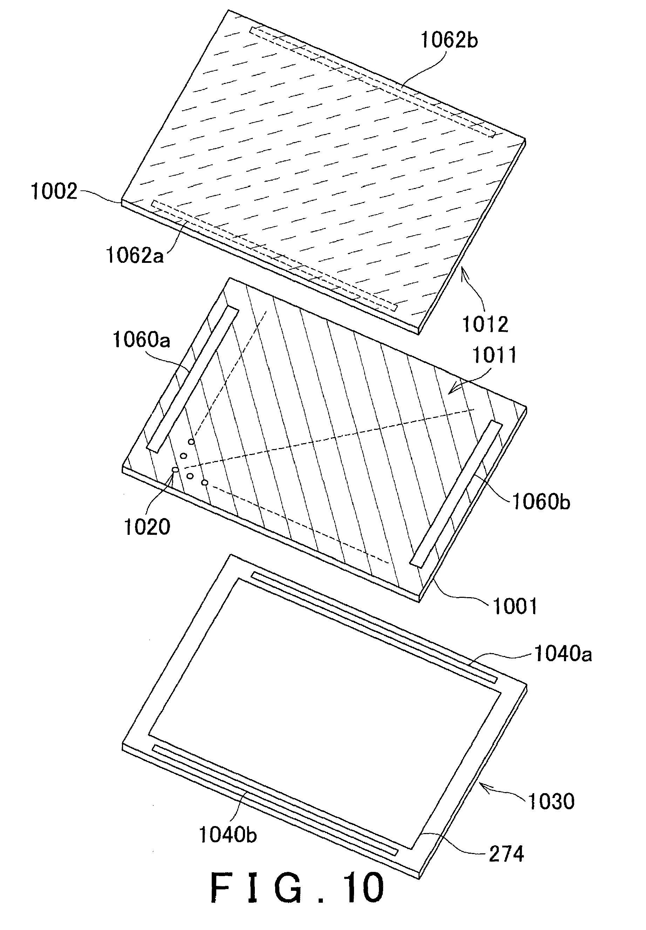

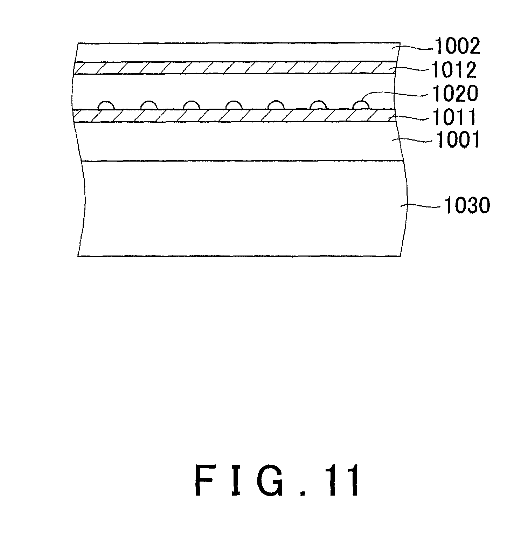

Hereinafter, the function and the operation of the component that the navigation device 100 possesses are explained more in detail. The input device 260 may, for instance, be a touch pad device. The input part 262 that the input device 260 possesses has the function to receive the operator input by the operator's pressing. The position calculation part 282 calculates the position in the input part 262 where the operator has pressed. Moreover, the pressing strength calculation part 284 calculates the pressing strength applied. The function and the motion of the position calculation part 282 and the pressing strength calculation part 284 is to be explained in the relation with Fig. 10 and Fig. 11.

The function setting part 201 allocates the predetermined operation function in the second domain of the input part 262 based upon the position pressed when the operator presses the first domain of the input part 262. And, the display control part 206 displays the display object corresponding to the operation function to the domain corresponding to the second domain of the display part 274. Specifically, the display control part 206 displays the function selection menu 120 in the second domain of the display part 274.

And, the operation judgment part 204 judges whether the operator has pressed the second domain.

The vibration control part 207 vibrates the input part 262 according to the operation function when the operation judgment part 204 judges that the operator has executed the pressing operation in the second domain. The first domain and the second domain may be the same domain, or may be the different domains. The first domain may be all the area of the input part 262, and the second domain may be a part of the area of the input part 262.

The threshold value setting part 220 acquires the pressing strength by acquiring the operation signal. And, the threshold value setting part 220 sets the pressing strength threshold that judges whether the operator has pressed the second domain based upon the pressing strength with which the operator has pressed the input part 262. The function execution part 202 executes the operation function when the second domain is pressed by strength greater than the threshold. As a result, it is sometimes possible to appropriately judge whether the function in the function selection menu 120 has been selected even when there exists the individual variation in the pressing strength applied to the input part 262.

The threshold value setting part 220 may set the threshold value based upon the pressing strength applied to the first domain. Specifically, the larger the pressing strength applied to the first domain is, the larger the threshold value the threshold value setting part 220 may set. In addition, the threshold value setting part 220 may set the threshold value based upon the pressing strength during a period of time from pressing the first domain to pressing the second domain. In this way, the threshold value setting part 220 can set the threshold value based upon the pressing strength when the operator slides the finger 150 on the function selection menu 120. Here, the threshold value setting part 220 may determine the threshold value of a predetermined value greater than the pressing strength applied to the first domain.

Here, the function setting part 201 may allocate the operation function in the second domain when the part is pressed by strength below the predetermined threshold value. The function execution part 202 may execute the operation function when the second domain is pressed with a strength greater than the threshold value. Here, the threshold value may be a threshold value that the threshold value setting part 220 has set. In this way, the function setting part 201 can conceal the function selection menu 120 so as not to react to erroneous operations when the operator presses the function execution part 202 strongly while the function selection menu 120 is not displayed.

The threshold value can be set to each operator. The operator specifying part 210 specifies the operator who operates the operation input device. The way how to specify the operator is described afterwards. The threshold value storage part 222 stores the threshold value that the threshold value setting part 220 set respectively to each of a plurality of operators in association with the operator identification information that identifies the operator. And, the function execution part 202 may execute the operation function when the operator presses the second domain with larger strength than the strength stored in the threshold value storage part 222 in association with operator identification information that identifies the operator specified by the operator specifying part 210.

In this way, it is sometimes possible to judge appropriately for each operator whether the function in the function selection menu 120 was selected by setting the threshold value corresponding to individual variation of the each operator's pressing strength. Here, the threshold value may be set by making the operator execute the pressing operation for the calibration.

The reference value storage part 212 stores the pressing strength reference value to each operator. The reference value here indicates the average strength that the operator applies. The reference value may be determined based upon the operation record of the operator. For instance, the reference value can be determined based upon the history data of pressing strength applied by the operator. For instance, the average value of pressing strength can be assumed to be a reference value. And, the operator specifying part 210 specifies the operator who operates the operation input device based upon the comparison result between the pressing strength applied to the input part 262 and the reference value stored in the reference value storage part 212.

Moreover, the operator specifying part 210 can determine the operator who released the lock of the vehicle as an operator who operates the navigation device 100 when the operation input device is built in the equipment used in the vehicle like the navigation device 100. For instance, the operator specifying part 210 can specify the operator who released the lock of the vehicle from the key information used when the lock of the vehicle was released. Specifically, the key owner storage part 230 stores operator identification information that identifies the operator who should own the key in association with the information that specifies the key that releases the lock of the vehicle having the operation input device. The operator specifying part 210 determines the operator who operates the operation input device, based upon the operator identification information that the key owner storage part 230 of the vehicle stores in association with the information that specifies the key used for releasing the lock. Examples of the lock release of the vehicle are the lock release of door, the lock release of steering wheel, the release of limitation of electric power use to the equipment in the vehicle, etc.

The function setting part 201 allocates the one or more operation functions at the predetermined position to each function in the second domain. In this case, if the periphery part of the input part 262 was pressed, sometimes all of the function selection menu 120 cannot be displayed in the input part 262. Therefore, the area that should become the second domain exceeds the domain of the input part 262, and sometimes the operator cannot select all the operation functions.

In such a case, the function setting part 201 may allocate as many functions as possible. That is to say, the function setting part 201 allocates as many operation functions as can be allocated in the input part 262 among the one or more operation functions. The function setting part 201 allocates as many operation functions as can be allocated in the input part 262 without changing the position of each operation function.

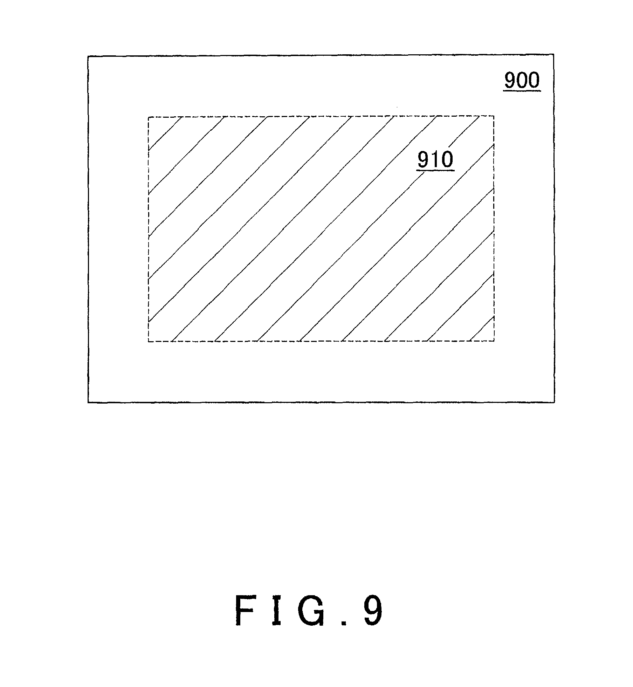

In addition, the function setting part 201 may allocate the operation functions under the conditions of being able to allocate all of one or more operation functions in the input part 262. The settable domain storage part 240 stores the first domain, which is a part of the domain of the input part 262, that can allocate all of the one or more operation functions. The function setting part 201 allocates the operation function when the first domain stored in the settable storage part 240 is pressed. Fig. 9 shows an example of the settable domain.

Moreover, the function setting part 201 determines at least one of the size and the shape of the second domain to allocate the operation functions when the operator presses the first domain. The operation functions may be allocated in the second domain of at least one of the determined size and the shape. Specifically, the function setting part 201 determines at least one of the size and the shape of the second domain to each operator to allocate the operation functions and may allocate the operation functions in the second domain of at least one of the determined size and shape.

For instance, the function setting part 201 stores the size of the second domain in association with the age of the operator, and may set the second domain of the stored size in association with the age of the operator specified by the operator specifying part 210. The function setting part 201 may store a larger size in association with a higher age.

Since the function selection menu 120 can be set larger in accordance with the higher age in this way, the operators of higher ages can be offered a user interface of easy operation. The operators may register the ages through the operator setting menu of the initial setting menu etc.

Furthermore, the function setting part 201 may store the size of the second domain in association with operator identification information. The operators may register the size of the second domain through the operator setting menu in the initial setting menu etc. In this way, the operators can set the function selection menu 120 into sizes corresponding to the operators' own favors. For instance, the operator can make the function selection menu 120 smaller when he want to reduce the range of the screen immediately before (e.g. Navigation screen etc.) to be overwritten by the function selection menu 120. Oppositely, the operator can make the function selection menu 120 larger when the operator does not care for the former screen to be overwritten by the function selection menu 120 to a large range.

Furthermore, the function setting part 201 may control the size of the second domain according to the fact whether the vehicle is moving, or according to the speed of the vehicle. For instance, the higher the speed of the vehicle is, the larger the function setting part 201 may determine the size of the second domain.

The function setting part 201 can control the shape of the second domain as well as the case to control the size of the second domain. For instance, the function setting part 201 can control the shape of the second domain for each operator by memorizing the information that determine the shape of the second domain in association with the operator's age or the information that identifies the operator. As a result, the function setting part 201 can display the function selection menu 120 of shape corresponding to the preference of the operator, or the function selection menu 120 of shape corresponding to the habits under the operation.

For instance, the function setting part 201 may display the function selection menu 120 with the shape that the operator doesn't easily make mistakes to the operators who often press the button outside the function selection menu 120 even with the intention to select the function button 130 in the function selection menu 120. Specifically, the function setting part 201 may control the shape of the function selection menu 120 so that the function selection menu 120 covers the domain where the frequency of operator's mistakes in pressing is higher than a prescribed value. In this case, the function setting part 201 may control at least one of the size and the shape of the function selection menu 120 so that function selection menu 120 covers the domain where the frequency of operator's mistakes in pressing is higher than a prescribed value.

More specifically, the function setting part 201 may store the information that shows the position and the frequency that an operator has made mistakes in pressing in association with the information that identifies the operator. And, the function setting part 201 may control at least one of the size and the shape of the function selection menu 120 so that the function selection menu 120 is displayed on the area where the frequency that an operator has made mistakes in pressing is higher than prescribed value. The function setting part 201 can control at least one of the size and the shape of the individual function button 130 in the function selection menu 120 as well as controlling at least one of the entire size and the entire shape of the function selection menu 120.

It can be judged from the history of the pressing operation by the operator whether an operator could not press the function selection menu 120, or whether an operator has made a mistake in pressing the function button 130. It can be judged that the operator had an intention to select the function button 130, for instance, when the operator executes the pressing operation for the function button 130 in the function selection menu 120 just after pressing other buttons than the function selection menu 120. In addition, it can be judged that the operator had no intention to select the function button 130 when the operator presses the cancellation button or the returning button just after pressing a certain function button 130. In this case, it can be judged that the function button 130 the operator has intended to select is the function button 130 of the function that was selected and actually operated.

The function setting part 201may control at least one of the size and the shape of the function button 130 so that the function button 130 that the operator intended to select is located on the area where the operator pressed by mistake. In this way, the function setting part 201 can offer the function selection menu 120 with high operativeness for an individual operator by controlling the size and the shape of the function selection menu 120, and the size and the shape of the function button 130.

The function setting part 201may control the colors of the display object displayed in the function selection menu 120 or the function button 130, and the size or shape of the characters, e.g. the kind of font, contained in the display object, as well as control the size and the shape of the function selection menu 120 or the function button 130. The function setting part 201 may control the colors of these display objects, and the size or the shape of the characters contained in the display object to each of the operators.

The function setting part 201 can display the function selection menu 120 with high visibility, for instance, displaying the function selection menu 120 with striking colors, or displaying the function items in the function selection menu 120 with big characters for the operators with low eyesight.

Oppositely, the function setting part 201 can display the function selection menu 120 with the color arrangement of no eyesore, or the function selection menu 120 with the functional items shown with comparatively small characters for the operators who dislike for the function selection menu 120 to stand out.

The function setting part 201 may store such information as color palette that defines color arrangement of the display object, the kind of fonts and the font size that defines characters contained in the display object in association with the operator identification information. The function setting part 201 extracts the stored color palette, the kind of fonts, and the font size associated with information that identifies the operators who operate the navigation device 10. And, the function setting part 201can arrange colors in the display object using the colors included in the extracted color palette, and display the characters in the display object with the extracted kinds and sizes of fonts.

Thus, the function setting part 201 can control the design of such display objects displayed in the second domain as the size and the shape of the domain, and the colors of the display object and the characters contained in the display object. That is, the function setting part 201can determine the design of the display object that is displayed in the second domain where the operation function should be allocated, and can display the display object of the determined design, when the operator presses the first domain. The function setting part 201can determine the design of the display object to each of the operators.

The storage medium 90 stores the program of the navigation device 100. The program stored in the storage medium 90 is offered to the digital information processors such as the computers functioning as the navigation device 100 in this embodiment. The CPU possessed in the computer controls each part of the computer operating according to the contents of the program. The program executed by CPU causes the computer function as the navigation device 100 etc. that is explained in relation to this figure and figure thereafter.

The optical record media such as DVD or PD, the magneto-optical media such as MO or MD, the tape medium or the magnetic record medium such as hard disk drives, the semiconductor memory, the magnetic memory etc. can be illustrated as the storage medium 90 as well as CD-ROM. Moreover, the private communication network, the hard disks provided in the server system with the Internet or the memory such as RAM etc. can also function as the storage medium 90.

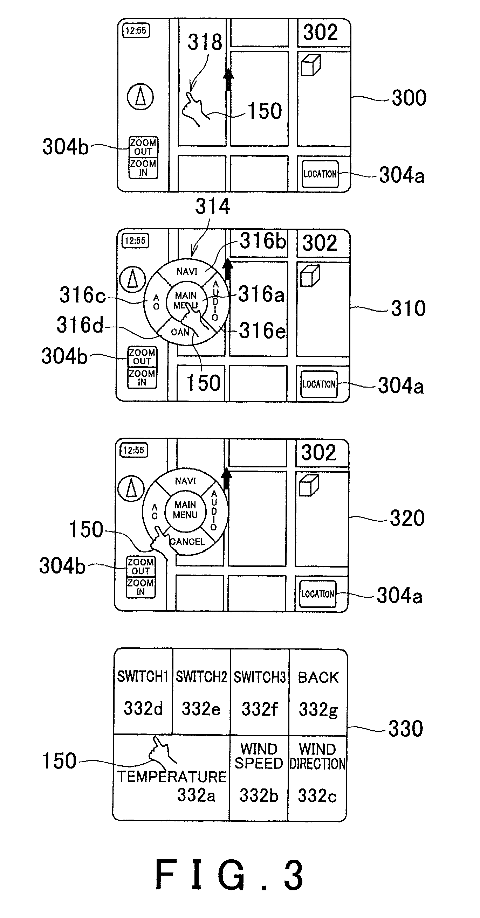

Figure 3 shows an example of the screen transition displayed in the input part 262. The navigation device 100 displays the stand-by screen 300 in the input part 262 when the pressing operation by the operator is not detected. A map or an image etc. for the vehicle navigation is illustrated as contents that can be displayed on stand-by screen 300. The stand-by screen 300 is a screen that stands by the pressing operation by the operator and the navigation screen mentioned above is an example of the stand-by screen 300.

The function setting part 201 allocates the functions to be executed when the operator presses the function on the input part 262. The function setting part 201 allocates the present-position map display function that displays the map of present position to the prescribed area on the stand-by screen 300. In this case, the display control part 206 overlaying displays the function button 304a for displaying the present-position map on the map 302 for the operators to select the allocated present-position map display function. The function execution part 202 executes the processing to display the present-position map when the operator presses the function button 304a.

Moreover, the function setting part 201 allocates the large area map/detailed map selection function that switches the display either to a large area map or to a detailed map, to the prescribed domain on the stand-by screen 300. In this case, the display control part 206 overlaying displays on the map 302 the function button 304b used for the large area map/detailed map switching in order for the operator to select the allocated large area map/detailed map selection function. The function execution part 202 executes processing for the large area map display or the detailed map display when the operator presses the function button 304b.

In addition, the function setting part 201, when it is pressed, allocates the function to display the function selection menu for selecting other functions at the other domain than the domain where function button 304a and function button 304b are displayed in the stand-by screen 300. Here, it is assumed that the operator makes a prescribed pressing operation by the finger 150 to the position 318 on the input part 262. As a prescribed pressing operation, such an operation can be illustrated as to press the position 318 for a longer time than the period of the prescribed length of time, as well as the touch operation for just a short time. Thus, the function setting part 201 can allocate the operation function in the second domain when the operator presses the first domain for a period of time longer the predetermined value.

In this case, the function setting part 201, the display control part 206, and the vibration control part 207 acquire the operation signal including the position 318 from the operation signal calculation part 280. In this case, the display control part 206 overlaying displays the function selection menu 314 on an area centered by the position 318. (Refer to the function selection screen 310) As shown in Figure 3, the display control part 206 displays the function selection menu 314 in the display part 274 together with the function button 304a and the function button 304b. In addition, the vibration control part 207 vibrates the input part 262 in the strength of such an extent as perceivable with a finger of human beings by vibrating the vibration part 272. As a result, the operator can perceive this vibration by the finger 150 and recognize that the function selection menu 314 is displayed. In this way, the navigation device 100 notifies the operator of the function selection button being displayed by vibrating the input part 262.

Moreover, the function setting part 201 allocates a plurality of predetermined functions in the domain where the function selection menu 314 is displayed. Specifically, the function setting part 201 sets the function for the main menu display, the function for car navigation setting menu display, the function for air conditioner setting menu display, the function for audio setting menu display, and the function for the cancellation in the function selection menu 314. As shown in Figure 3, the function setting part 201 allocates not only the main menu display function in the central area including the position 318, but also other functions one by one to the areas where the surroundings of the main menu area were divided into four in the radiation direction.

Moreover, the display control part 206 makes the display part 274 display the function button 316a to select the main menu display, the function button 316b to select the car navigation setting menu display, the function button 316c to select the air conditioner setting menu display, the function button 316d to select the cancellation, and the function button 316e for the audio setting menu display in the domain where each function was allocated on the input part 262.

The position calculation part 282 supplies the operation signal including the information that shows the position being touched to each part of navigation device 100 when the operator slides the finger 150 while touching the input part 262. As shown on the function selection screen 320, when the position pressed moves to the domain where function button 316c is displayed, the vibration control part 207 vibrates vibration part 272 to notify the operator so.

When the operator executes prescribed pressing operation by the finger 150 in the domain of the function button 316c, the operation judgment part 204 judges that the operator has selected the execution of the function corresponding to the function button 316c based upon the operation signal.

As the prescribed pressing operations to select the functions, the operation to apply pressing strength greater than the predetermined threshold value, the operation that presses almost the same position for two times, the tap operation etc. can be illustrated as well as the operation that detach the finger 150 from the input part 262.

When the function button 316c is selected, the function execution part 202 executes the processing to display the air conditioner setting menu. The function selection screen 330 shows an example of the execution result. Specifically, the display control part 206 displays the function buttons from 332a to 332g for the air conditioner setting in the display part 274. On the function selection screen 330, the function buttons from 332a to 332g are shown so as not to be confused, however, the function buttons 332 may be displayed overlaying on the map 302.

As shown in Figure 3, the function selection screen 330 allocates individual function button 332 in each domain by dividing the entire screen into as many partial regions as the number of the functions, different from the function selection screen 310. The function setting part 201 allocates the functions to execute the setting that corresponds to the air conditioner in the domain where the function buttons 332 are displayed. By executing the prescribed pressing operation on the input part 262 with the finger 150, the operator can execute the corresponding function.

As a prescribed pressing operation on the function selection screen 330, for instance, the operation to slide the finger 150 just like drawing the circle on the input part 262 while touching the input part 262 can be illustrated. For instance, when an operator executes an operation to draw the circles on the function button 332a for the temperature setting of the air conditioner, the function execution part 202 may execute the function to raise or to lower the preset temperature of the air conditioner according to the length of the circular arc drawn by the finger. The function execution part 202 may determine whether to raise or lower the temperature based upon the rotation direction after directing the rotation direction when the circle is drawn. In addition, the function execution part 202 can also raise or lower the preset temperature every time it is pressed.

The internal processing of the operation processing part 200 for the slide and the pressing operation at the function selection screen 330 is similar to the case when the function selection screen 320 is displayed excluding the point where the contents of the executed functions and the pressing operations are different. For instance, the vibration control part 207 can vibrate vibration part 272 in order to notify the operator on which function button 332 the finger 150 is located, when the operator executes the slide operation on the function selection screen 330. Since such processing is similar to the processing mentioned above, the explanation of the operation of each part in the case that the function screen 330 is displayed is to be omitted.

In the explanation mentioned above, the function execution part 202 was assumed to perform the function corresponding to the function button 316 at the position pressed among functions corresponding to the function buttons 316. The operator occasionally moves the finger 150 paying attention mainly to the direction where the function button 316 to be selected is located, however, when the operator operates the input part 262 without seeing. Therefore, even if the operator can move the finger 150 to a correct direction, it is likely that the finger goes out of the area of the function selection menu 314. Even if the operator can approximately grasp the relative position between each function button 316, it is difficult to grasp the correct position. In addition, even if the operator learns by vibration that on which function button 316 the finger 150 is located when the operator is operating under touch typing, it is difficult to grasp whereabouts in the function button 316 the finger 150 is located. Therefore, occasionally the operator cannot point accurately the function button 316 to be selected by the finger 150.

When the finger 150 is located on function button 316a, for instance, the operator is assumed to moves the finger 150 to the left so that the operator selects the function button 316c at the left. At this time, if the position of finger 150 at the beginning of movement is in the vicinity of the boundary of the function button 316a and the function button 316b, the function button 316b would sometimes be selected against the operator's intention. And, if the operator executes the pressing operation further on the function button 316b, the function related to the car navigation system would probably be executed against the operator's intention. It is possible that the operator grasps the present location in perceiving the vibration pattern corresponding to the function button 316b, however, the operator might be confused when he perceives the vibration pattern corresponding to function button 316b even though the operator has moved the finger 150 to the left from the function button 316a.

It is naturally preferable that the operator can select the function that conforms to the operation intention as much as possible even under touch operation. Specifically, the operation judgment part 204 judges the movement direction of the position pressed based upon the history of the position signal taken from the position calculation part 282. And, the function execution part 202 may execute the selected function after selecting the function based upon the moving direction, when the operation judgment part 204 has judged the pressing operation by the operator. More specifically, the function execution part 202 may select the function based upon the movement direction and the position before movement starts. For instance, the function execution part 202 may execute the function corresponding to the function button 316c when the finger 150 executes a prescribed pressing operation after the moving direction to the left has been detected from the starting point of any position on the function button 316a. The function execution part 202 may execute the function corresponding to the function button 316c, even if the finger 150 is located on the function button 316b or a prescribed pressing operation was executed outside the area of the function button 316c. In this way, the operator can select the function that conforms to the operator's operation feeling even when the operator executes a touch typing.

Similarly, the vibration control part 207 may select the vibration pattern based upon the direction of the finger's movement, and can vibrate the vibration part 272 with the selected vibration pattern.

More specifically, the vibration control part 207 may select the vibration pattern based upon the movement direction of the finger 150 and the position before movement starts. For instance, the vibration control part 207 may vibrate the vibration part 272 in the vibration pattern corresponding to the function button 316c when the finger's movement directing to the left from a starting point of any position on the function button 316a is detected for the period of the prescribed length of time. Because the vibration pattern that conforms to the operator's operation feeling can be selected even when the operator executes touch typing, in this way, the operator might sometimes be prevented from the confusion beforehand.

In the explanation mentioned above, the function execution part 202 selected the function corresponding to the direction of the movement, however, in other mounting, the function setting part 201can change to allocate the function in each domain according to the direction of the movement. The function execution part 202 may selects the function based upon the direction of the movement when the operator is not looking at the input part 262, and may select the function based upon the position pressed when the operator is looking at the input part 262. Likewise, the vibration control part 207 may select the vibration pattern based upon the direction of the movement when the operator is not looking at the input part 262, and can select the vibration pattern based upon the position pressed when the operator is looking at the input part 262. It may be judged from the image of the operator's eyes whether the operator is looking at the input part 262. Moreover, corresponding to the speed of the vehicle, it may be determined whether to select the function and the vibration pattern based upon the direction of the movement or the function and the vibration pattern based upon the position pressed, instead whether the operator is looking at the input part 262. For instance, the function may be selected based upon the direction of the movement when the speed of the vehicle is greater than the predetermined value, and the function may be selected based upon the position pressed when the speed of the vehicle is smaller than the predetermined value.

Moreover, the function selection screen 330 can function as a stand-by screen 300. When the operator executes long pressing operation with the function selection screen 330 being displayed, for instance, the display control part 206 may overlaying display the function selection menu 314 to the position pressed, and the function setting part 201 may allocate the function corresponding to the function selection menu 314. In this way, the stand-by screen 300 is a concept including any screen displayed while standing by the pressing operation by the operator. In a word, the stand-by screen 300 may indicate all the screens displayed while the pressing operation is being able to be received in order to display the function selection menu 314, as well as the navigation screen or the function selection screen 330 selected through the function selection menu 314.

In the example mentioned above, it is explained that that function button 316d is assumed to be a cancellation button, however, the function button 316d may be a button in which the operator can set any function. In a word, the function allocated to the domain corresponding to the function button 316d may be freely selected by the operator. For instance, the operator can set a function like the function with high operation frequency, as a function to allocate in the domain corresponding to the function button 316d. The function setting part 201can allocate a function set by the operator to the domain corresponding to the function button 316d. Thus, the function setting part 201can allocate the function prescribed to each operator as at least one function out of a plurality of the functions corresponding to the function buttons 316 in the function selection menu 314.

According to the navigation device 100, when the input part 262 is pressed, the function selection menu 314 is set centering the position pressed.

And, the vibration pattern of the input part 262 can notify the operator of the function button 316 that the finger 150 is located. In this way, the operator can operate the air conditioner or operate the audio device without seeing the screen displayed in the input part 262.

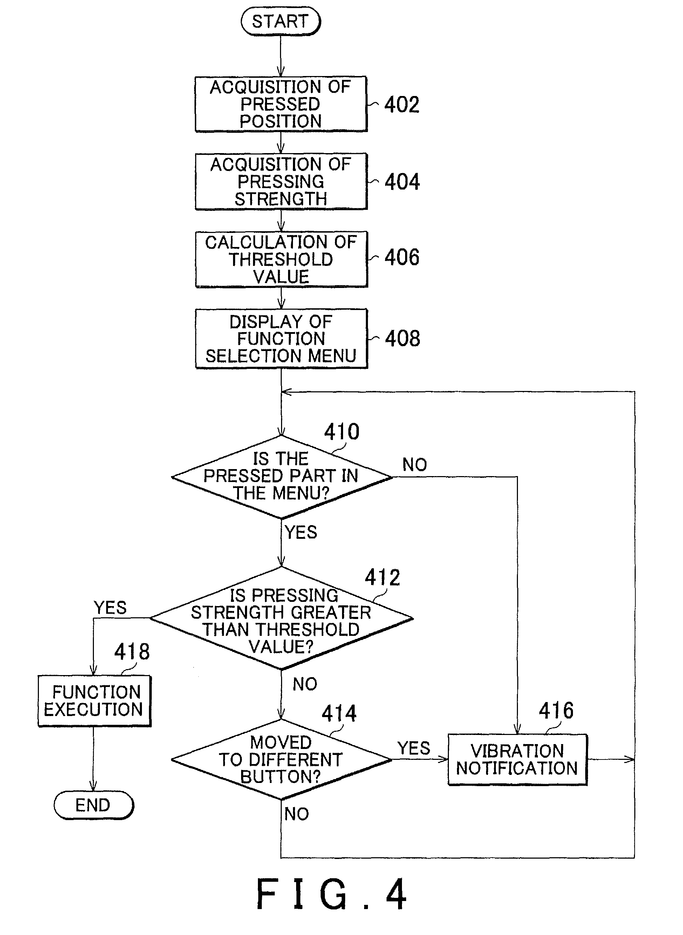

Figure 4 shows an example of the processing flowchart when the operator executes the pressing operation. Here, it is assumed that the operator executes the pressing operation while the stand-by screen 300 in Fig. 3 is being displayed. In the following explanations, it is assumed that the operator selects the function corresponding to the function button 316 by strongly pressing the function button 316.

When the operator presses the function button 316 on the stand-by screen 300, the threshold value setting part 220 acquires the position pressed. (the step 402) Then, the threshold value setting part 220 acquires the pressing strength (the step 404). The position pressed can be specified based upon a position signal given by the position calculation part 282, and the pressing strength can be specified based upon the strength signal given by the pressing strength calculation part 284.

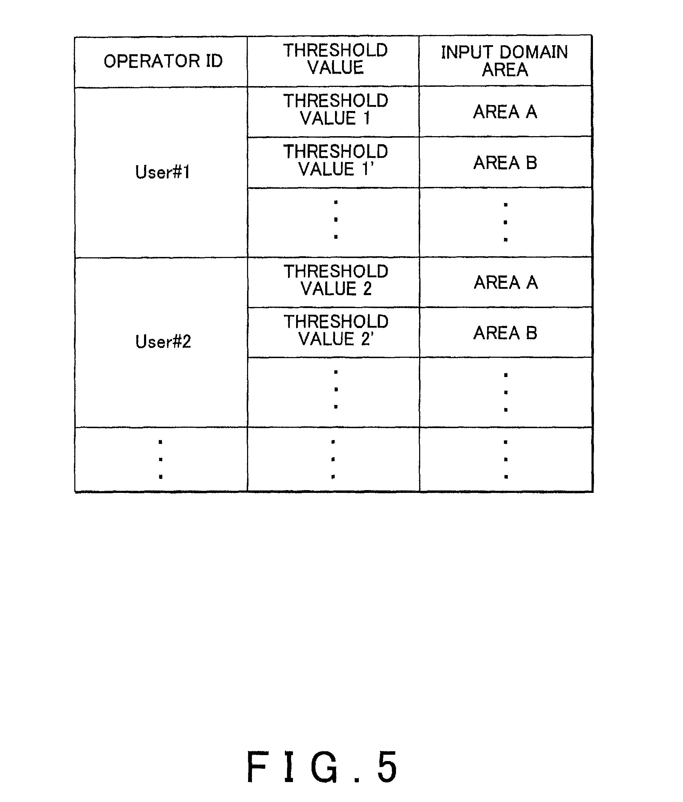

The threshold value setting part 220 calculates the threshold value for the detection of the selection operation to select the function of the function button 316. (the step 406) Specifically, the function execution part 202 can set the threshold value based upon the position pressed acquired in the step 402 and the pressing strength acquired in the step 404. The calculation method of the threshold value is to be explained in detail in relation to Fig. 5. As an example, the larger the pressing strength acquired in the step 404 is, the larger threshold value the threshold value setting part 220 may set. Thus, it is sometimes possible to appropriately correspond to the individual variation of the pressing strength.

The display control part 206 displays the function selection menu 314 on the display part 274. (the step 408) And, the operation judgment part 204 judges whether the position pressed detected in a new timing is in the function selection menu 314 not by polling the position signal and the strength signal. The operation judgment part 204 advances processing to the step 412 when the position pressed is in the function selection menu 314.

In the step 412, the operation judgment part 204 judges whether the pressing strength in a new pressing operation exceeds the threshold value calculated in the step 406. (the step 412) The operation judgment part 204 advances the processing to the step 418 and the function execution part 202 executes the function corresponding to the position pressed when the pressing strength is judged to exceed the threshold value. Here, for instance, the processing etc. that display the air conditioner setting menu are executed as mentioned above.

When the pressing strength is judged to be less than the threshold value in the step 412, the operation judgment part 204 advances the processing to the step 414 and judges whether the finger 150 has moved to the different function button 316. (the step 414) When the finger is judged to have moved to the different function button 316, the processing is returned to the step 410, while the vibration control part 207 vibrates the vibration part 272 by the vibration pattern corresponding to the function button 316 of the moved position. (the step 416)

In the step 414, when the finger 150 is judged not to have moved to the different function button 316 the processing is returned the step 410 while the vibration control part 207 does not vibrate the vibration part 272. Even when the finger 150 does not move to the different function button 316, the vibration part 272 can be vibrated under the conditions that the period of the predetermined length of the time has passed from the timing that the vibration part 272 was vibrated at the end.

In the step 410, when the position pressed is not judged to be in the function selection menu 314, the processing is returned to the step 410 while the vibration control part 207 notifies the operator of the position pressed being out of the function selection menu 314 with vibrating the vibration part 272.

Figure 5 shows an example of the data that the threshold value storage part 222 stores in the table form. The threshold value storage part 222 stores the threshold value in association with the operator ID and the position in the input domain of the input part 262. As it is mentioned above, the threshold value is a threshold value of the pressing strength, and it is applied to the comparison processing that judges whether the operator has selected the function button 316.

The operator ID is an example of the operator identification information, and it may be an ID value allocated respectively to each of a plurality of operators. The navigation device 100 may allocate a different ID value to each operator, for example, in registering a plurality of operators who make use of the navigation device 100 through an initial setting menu etc. after purchasing. The navigation device 100, when it is used, may set the operator who actually makes use of the navigation device 100 among a plurality of operators registered through the operator selection setting menu that selects the operator who makes use of the navigation device.

The domain information that the threshold value storage part 222 stores in the input domain may be information that identify a plurality of domains in the input part 262. The coordinate values with which each domain is determined can be applied to the information that identifies the domain. The diagonal coordinate values can determine the domain, for instance, to a rectangular domain.

In this way, the threshold value storage part 222 stores each threshold value respectively in association with the operator identification information and a various domain in the input part 262. As a result, the operation judgment part 204 can judge whether the function selection button was pressed not making use of the value that the threshold value storage part 222 stores as a threshold value when a specific domain is pressed in association with the combination of pressed domain and operator identification information.

When an operator, who takes a seat on the driver's seat, operates the navigation device 100, he would sometimes feel the difference in easiness of pressing between the screen domain nearby and a screen domain far away from the driver's seat. Therefore, even when the operator presses by the same feeling, the actual pressing strength would occasionally be different in each screen domain. Because the threshold value storage part 222 stores the threshold value in association with the domain, however, an appropriate threshold value can be applied to the pressed domain. Because the threshold value storage part 222 stores the threshold value also in association with each of the operators, the threshold value can be set in consideration of the individual variation of the operators. In this way, the operation judgment part 204 can judge more appropriately whether the function button 316 has been pressed.

The threshold value storage part 222 may store the threshold value further in association with the relative position of a domain from the reference point of the menu. When a plurality of function buttons 316 are displayed in different domains, for instance, the threshold value storage part 222 may store the threshold value further in association with the information that shows a relative position between the domain where each function button 316 is displayed and the center position (the position pressed) of the function selection menu 314.

The threshold value storage part 222 stores a threshold value in association with a relative position of the pressed domain to the center position of function selection menu 314. The operation judgment part 204 can judge whether function button 316 was pressed making use of the threshold value in addition to the operator identification information and the pressed area concerned, when an area in the function selection menu 314 has been pressed.

When thinking about the case where an operator slides the finger 150 under pressing after pressing the input part 262, the pressing strength would occasionally be different according to the operator's habit etc. from each other case of the slide to the left or to the right from the position pressed. The threshold value storage part 222 can judge whether function button 316 is pressed, however, applying an appropriate threshold value to the pressed area, because the threshold value storage part 222 stores the threshold value associated with the relative position mentioned above.

The threshold value storage part 222 may store the threshold value that the threshold value setting part 220 has set. As it was mentioned above, the threshold value setting part 220 can set the threshold value based upon the pressing strength applied for displaying the function selection menu 314. For instance, the larger the pressing strength concerned is, the larger threshold value the threshold value setting part 220 can set. In this way, the influence of the operator's individual variation can be reduced. Even within an operator, a more appropriate threshold value could be set corresponding to the pressing strength immediately before, if there is any correlation in strength between the consecutive pressing operations.

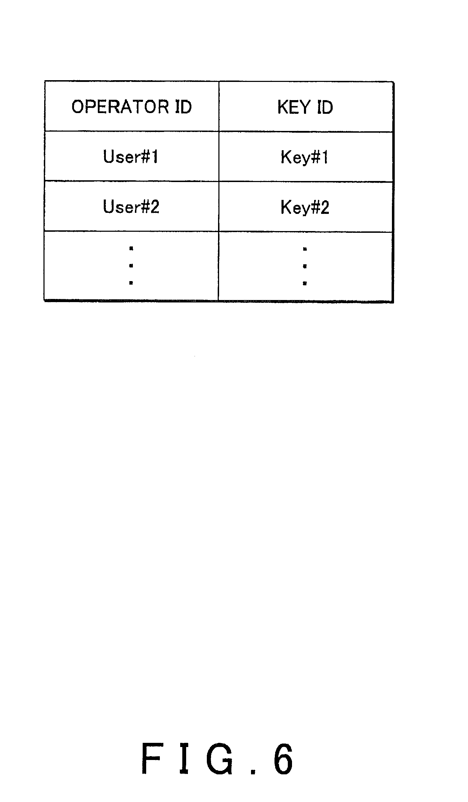

Figure 6 shows an example of the data that the key owner storage part 230 stores in the table form. The key owner storage part 230 stores the operator ID in association with the key ID. A remote control key of the radio wave type can be illustrated as a key. In this case, the key is assumed to emit the identification data that can specify each key.

The key ID is an example of information that identifies the key, and may be the ID value allocated in each of a plurality of keys respectively. The navigation device 100 may allocate a different ID value in each key registering a plurality of keys for the vehicle that the navigation device 100 is provided, for instance, through an initial set menu etc. after purchasing. And, the navigation device 100 may register the operator who mainly makes use of the key for each key.

And at use, when the lock of a vehicle where the navigation device 100 is built in is released, the key information acquisition part 232 may acquire the identification data of the key used to release from the vehicle. The key owner storage part 230 stores the operator ID in association with the information that identifies the key used for releasing the lock. The operator specifying part 210 may specify the operator ID, and determine the operator ID concerned as the operator identification information of the operator who makes use of the navigation device 100.

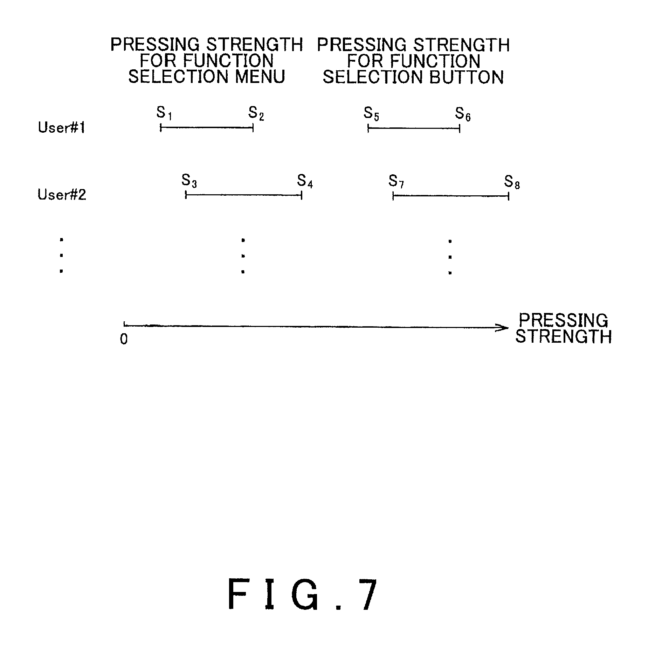

Figure 7 schematically shows an example of the method to specify an operator based upon the pressing strength. The reference value storage part 212 stores the reference value of pressing strength to identify the operator. For instance, the pressing strength is assumed to be greater than S1 and smaller than S2 in most cases, when an operator identified by the operator ID of Operator #1 (Hereinafter, it is called Operator #1) presses the input part 262 to display the function selection menu 314. On the other hand, the pressing strength is assumed to be greater than S3 and smaller than S4 in most cases, when an operator identified by the operator ID of Operator #2 (Hereafter, it is called Operator #2) presses the input part 262 to display the function selection menu 314.

In this case, the reference value storage part 212 stores the pressing strength zone of greater than S3 and smaller than S4 corresponding to Operator #2 as well as the zone of greater than S1 and smaller than S2 corresponding to Operator #1. And, the operator specifying part 210 can judge that the probability that Operator #2 operates the navigation device 100 is high if the pressing strength is greater than S2 and smaller than S4, when the pressing operation is executed to display the function selection menu 314. Or, the operator specifying part 210 can exclude Operator #1 from the operators who have the possibility of operating the navigation device 100. In this case, the operator specifying part 210 gives the priority to and determines Operator #2 rather than Operator #1 as an operator who is operating the navigation device 100.

The operation judgment part 204 can judge whether the pressing operation is executed against the function button 316 making use of the threshold value that the threshold value storage part 222 stores in association with the operator ID of the operator determined by the operator specifying part 210.

The pressing strength is assumed in most cases to be greater than S5 and smaller than S6 when the Operator #1 presses the function button 316, and the pressing strength is assumed in most cases to be greater than S7 and smaller than S8 when the Operator #2 presses the function button 316.

In this case, the reference value storage part 212 stores the range of greater than S5 and smaller than S6 of the pressing strength applied to the function button 316 in association with Operator #1, and the range of greater than S7 and smaller than S8 of the pressing strength in association with Operator #2. As a result, the operator specifying part 210 can specify the operator who is making use of the navigation device 100 by the processing, similar to the processing executed in the pressing strength applied to the function selection menu 314, based upon the pressing strength applied to the function button 316.

In the case that the pressing strength applied to display the function selection menu 314 is greater than S3 and smaller than S2, sometimes the operator cannot be specified by the information only. In this case the pressing strength applied to the function button 316 is greater than S5 and smaller than S7, the operator specifying part 210 can specify the Operator #1 as an operator of the navigation device 100. Thus, the operator specifying part 210 can specify the operator who is operating the navigation device 100 based upon the combined information of the pressing strength to display the function selection menu 314 and the pressing strength applied to the function button 316.

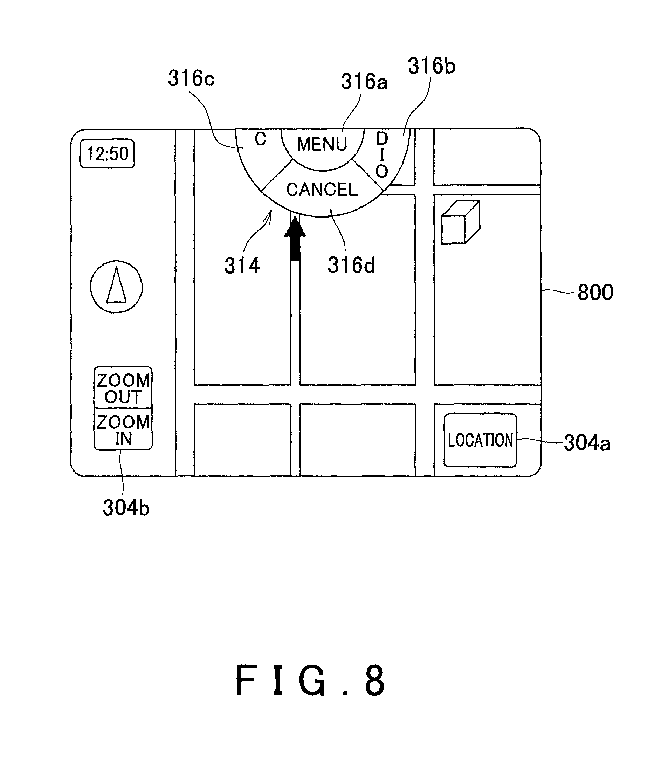

Figure 8 shows another example of the screen displayed in the input part 262. On the function selection screen 800 shown in this figure, only a part of domain of the function selection menu 314 is displayed in the input part 262. Specifically, the function button 316b is not displayed in the input part 262 on this function selection screen 800. Thus, the display control part 206 displays the function buttons 316 of one or more in the display part 274 in the prescribed positional relation regardless all the function selection menus 314 can be displayed in the display part 274. At this time, the display control part 206 does not change the size of the function buttons 316.

With such a display control, a part of the function buttons 316 cannot occasionally be displayed just like the function selection screen 800 depending on the position the operator presses in the input part 262. Because the function buttons 316 of one or more are always arranged at the same relative position, however, the operator may only have the finger 150 slide with a constant feeling of distance without worrying where the function selection menu 314 is displayed in the input part 262.

Figure 9 shows the range to be pressed where the function selection menu 314 can be displayed. As explained in relation to Fig. 8, when the operator presses the periphery part in the input part 262, a part of the function buttons 316 out of the function selection menus 314 becomes occasionally unselectable. When this is inconvenient to the operator, the display control part 206 does not need to display the function selection menu 314 in the display part 274 to avoid a part of the function buttons 316 to be unselectable, when the operator presses the periphery area in input part 262.

Specifically, the display control part 206 displays the function selection menu 314 in the display part 274 only when the operator presses the position within the domain 910 in the domain 900 that can be input in the input part 262. In the same way, the function setting part 201 allocates various operation functions to the domain corresponding to the domain where the function selection menu 314 is displayed only when the position in domain 910 is pressed.

The domain 910 is set in such a manner as to display all the function buttons 316 that form the function selection menu 314 in the display part 274, when the function selection menu 314 is displayed centering on any position within the domain 910. Therefore, the function setting part 201 can allocate the function that corresponds to the function buttons 316 in the input part 262 centering on any position within the domain 910.

On the other hand, the display control part 206 does not display the function selection menu 314 in the display part 274 when the operator presses the point outside of the domain 910 in the domain 900. Similarly, the function setting part 201 does not allocate the functions corresponding to the function buttons 316 in the input part 262. Instead, the vibration control part 207 may vibrate the vibration part 272 with the vibration pattern to notify the operator of the error when the operator presses the point outside of the domain 910. In this way, the operator can recognize that the function selection menu 314 is not displayed, even if the operator does not see the input part 262.

In this case, the domain 910 may be set within the area where at least the function buttons 316 that are necessary to be displayed are displayed. As the function buttons 316 that are necessary to be displayed, the function buttons 316d for the cancellation can be illustrated. When the function button 316d for the cancellation is not displayed, it would be difficult to cancel the function selection menu 314. On the other hand, as far as at least a part of the function button 316d for the cancellation is displayed, even if other function buttons 316 are not displayed, it is easy to cancel the function selection menu 314 and the function selection menu 314 can easily be displayed again.

As explained above, the operator can operate the navigation device 100 without seeing the fingertip substantially. The operation input device in the present invention can offer a user interface that is appropriate for the car navigation system like the navigation device 100, however, the operation input device itself can be applied to other various usages than the car navigation system. The operation input device in the present invention may be, for instance, navigation devices for various vehicles including the electric train in addition to the navigation device for the car.

In addition, the operation input device can be mounted as a remote-control device that controls TV apparatuses, audio systems, air conditioning systems and other home appliances etc. The operation input device can be mounted on the tip of the arm part of the chair or the like. Moreover, the operation input device can be provided in such portable terminals as cellular phones and portable terminals (PDA), etc. Also in such portable terminals, the operation input device can offer convenient user interface, since a prescribed menu can be displayed in the pressing point, when the operator executes pressing operation on the screen.

As explained in relation to Fig. 1, the display function possessed in the input part 262 can be realized with other devices that project the display to the windshield. Similarly, the input part 262 can display the function selection menu 314 etc. to the display device that the operation object possesses even if the input part does not possess the display function, when the operation object has the display device like TV apparatus etc. The operator can easily operate the operation input device because the operator is able to input without seeing the fingertip by the help of the vibration function during operation even though the input part 262 does not possess the display function.

In this case, the input part 262 can detect the pressing operation in various methods of the resistance film method or the pressure sensitive capacitance method etc. The pressure sensitive capacitance method can detect the pressing strength based upon the difference of the capacitance value. The detection of pressing strength by the resistance film method is explained hereinafter.

Figure 10 shows an example of the composition of the input device 260 with composition example of the vibration part 272 and the display part 274. The input device 260 possesses a first substrate 1001, a second substrate 1002, a first conductive film 1011, a second conductive film 1012, a first electrode 1060a, a first electrode 1060b, a second electrode 1062a, a second electrode 1062b, a spacer 1020, and a lower substrate 1030.

The first conductive film 1011 is provided on the first substrate 1001. Specifically, the first conductive film 1011 is stuck on the first substrate 1001. The first conductive film 1011 may be a resistance film when the input device 260 aims at the position detection. The ITO film can be illustrated as a resistance film.

The second substrate 1002 is provided at the side opposing to the first conductive film 1011that is provided on the first substrate 1001. The second substrate 1002 is flexible and can be transformed according to the pressure strength applied. The second conductive film 1012 is provided on the second substrate 1002 at the side opposing to the first substrate 1001. The second conductive film is stuck on the second substrate1002. When the input device 260 aims at the position detection, the second conductive film may be a resistance film.

The first substrate 1001 that the first conductive film 1011 is stuck on and the second substrate 1002 that the second conductive film 1012 is stuck on are fixed in parallel with a prescribed space.

The spacer 1020 is provided on the first conductive film 1011 at the side opposing to the second conductive film 1012. As it is shown in the figure, the spacer 1020 may be a dot spacer. The spacer 1020 may have the lattice shape, too.

At the mutually opposing ends on the first substrate 1001, the first electrode 1060a and the first electrode 1060b are provided so that the voltage can be applied in the x-direction of the first conductive film1011. At the mutually opposing ends on the second substrate 1002, the second electrode 1062a and the second electrode 1062b are provided so that the voltage can be applied in the y-direction of the second conductive film 1012. When the operator presses the upper part of the second substrate 1002 with the finger 150 etc., the part corresponding to the pressed point can be conductive.

When the second substrate 1002 is pressed under the state of the voltage being applied between the first electrodes 1060, the position calculation part 282 can calculate x-coordinate of the pressed point by measuring the potential of the second electrodes 1062. When the second substrate 1002 is pressed under the state of the voltage being applied between the second electrodes 1062, the position calculation part 282 can calculate y-coordinate of the pressed point by measuring the potential of the first electrodes 1060. In this way, when the first conductive film 1011 and the second conductive film 1012 come into contact, the position calculation part 282 can calculate the position where the first conductive film 1011 and the second conductive film 1012 come into contact based upon the potential of the second conductive film 1012. In this case, the domain that the operator is able to press on the second substrate 1002 can be considered the input part 262 mentioned above.

The display part 274 such as the liquid crystal devices is built in to the lower substrate 1030. The vibration elements 1040 that functions as vibration part 272 are formed at the upper part of the lower substrate 1030. The piezoelectric element can be an example of the vibration element 1040.

The input device 260, that the first substrate 1001 and the second substrate 1002 are fixed, is stuck with the lower substrate 1030 substantially parallel to the first substrate 1001. At this time, the vibration elements 1040 are so fixed as to contact with the first substrate 1001. As a result, the vibration control part 207 can vibrate the second substrate 1002 and furthermore can vibrate the input device 260 by vibrating the vibration elements 1040.

In this case, at least the first substrate 1001, the second substrate 1002, and first conductive film 1011 and the second conductive film 1012 have the transparency. As a result, the light displayed in the display part 274 can be emitted outside of the operation input unit 250 penetrating through the first substrate 1001, the second substrate 1002, the first conductive film1011, and the second conductive film1012.

Figure 11 shows the cross-section view of the input device 260 where the first substrate 1001, the second substrate 1012, and the lower substrate 1030 are stuck with others. As it is mentioned above, the position pressed can be detected in the contact of the second conductive film 1012 and the first conductive film 1011, by the second substrate 1002 being pressed. Though Figure 10 illustrates the composition of four-wire resistive film method, other various methods like five-wire resistive film method etc. can also form the input device 260.

Hereafter, the detection method of the pressing strength is explained. When an object of some size such as the finger 150 presses the second substrate 1002, the pressing strength causes the difference of area that the second conductive film 1012 and the first conductive film 1011 come into contact. The number of contact points that the second conductive film 1012 comes into contact with the first conductive film 1011 sometimes varies corresponding to the pressing strength because of the spacer 1020 being provided. In this reason, the resistance value between the second conductive film 1012 and the first conductive film 1011 varies according to the area in the contact between the both conductive films. The pressing strength can be calculated based upon the detected resistance value after detecting the resistance concerned. In a word, the pressing strength calculation part 284 can calculate the pressing strength based upon the resistance value between the first conductive film 1011 and the second conductive film 1012. As an example, the larger the resistance value concerned is, the smaller the pressing strength calculation part 284 may calculate the pressing strength.

It is explained in relation to the figures from Fig. 1 to Fig. 9 that the function execution part 202 executes various functions according to the pressing strength.

The vibration control part 207 and the display control part 206 execute the processing according to the pressing strength as well as the function execution part 202. In this way, the operation processing part 200 can execute the processing of various operation functions according to the resistance value between the first conductive film 1011 and the second conductive film 1012 when the first conductive film 1011 and the second conductive film 1012 come into contact with each other.

Moreover, as it is mentioned above, the operation judgment part 204 judges making use of the threshold value of the pressing strength whether the function button 316 is regarded to have been pressed. And the operation judgment part 204 judged that the input part 262 has been pressed when it was pressed with the strength below the threshold value. Thus, the operation judgment part 204 can judge that the resistance value conforms to the first conditions when the value exceeds the predetermined first threshold value, and can judge that the resistance value conforms to the second conditions when the value exceeds the predetermined second threshold value that is greater than the first threshold value. In a word, the operation judgment part 204 can judge whether the resistance value conforms to either the first conditions or the second conditions when the first conductive film 1011 and the second conductive film 1012 come into contact. And, the operation processing part 200 can execute the processing of various operation functions according to the conformity result to the first conditions and the second conditions of the resistance value.

Moreover, as it is mentioned above, the function setting part 201can execute processing that allocates the functions corresponding to the function button 316 in the input part 262 and can execute the functions corresponding to the function button 316. Thus, the operation processing part 200 can allocate the one or more operation functions at the position corresponding to the contact position that the position calculation part 282 calculated out, when the resistance value is judged to conform to the first conditions. In addition, the operation processing part 200 can execute the processing of the operation function allocated at the position corresponding to the contact position, when the resistance value is judged to conform to the second conditions in the case that the one or more operation functions are allocated.

As it is the mentioned above, the display control part 206 can display the function selection menu 314 in the display part 274 when the input part 262 is pressed. Thus, the operation processing part 200 can display the display objects of one or more corresponding to the one or more operation functions respectively at the position on the display part 274 corresponding to the contact position that the position calculation part 282 calculated when the resistance value is judged to conform to the first conditions.

Moreover, as it is mentioned above, the vibration control part 207 can vibrate the input part 262 in a prescribed vibration pattern corresponding to the function selection menu 314 when the input part 262 is pressed. Moreover, the vibration control part 207 can vibrate the vibration part 272 in the vibration pattern corresponding to the function of the function button 316 when function button 316 is pressed more strongly. Thus, the operation processing part 200 can vibrate the vibration part 272 with various types of vibration properties according to the conformity result to the first conditions and the second conditions of the resistance value. More specifically, the operation processing part 200 can vibrate the vibration part 272 in various types of vibration patterns according to the conformity result to the first conditions and the second conditions of the resistance value. The vibration control part 207 can vary the vibration pattern by changing at least either the vibration intensity or the vibration period.

The present invention has been hereinbefore explained using an embodiment, however, the technical range of the present invention is not limited within the range described in the embodiment mentioned above. It is well known in the persons skilled in the art that various changes or improvements can be added in the embodiment mentioned above. It is clear from the description of the claims that the embodiments that such changes or the improvements have been added are also within the technical scope of the present invention.

It is necessary to be noted that the order of executing each processing of motions, procedures, steps and stages etc., in apparatus, system, program and method shown in the claims, in the descriptions, and in the drawings can be realized in any order as long as it is not specified as special steps of "beforehand", "in advance" etc., or the output of the processing of a previous stage is not used in the following processing. The operation flow in the claims, description, and drawings does not always mean that the prescribed executing order is indispensable even if the operation flow is explained using "first of all" and "next", etc. for the sake of convenience.

## Claims

1. An operation input device, comprising:
a first substrate;
a first conductive film provided on the first substrate;
a second substrate that is provided opposing the side of the first conductive film on the first substrate and having flexibility to be deformed according to pressing strength applied thereto;
a second conductive film that is provided on the second substrate at a side opposing the first substrate; and
a spacer provided on the first conductive film at the side opposing the second conductive film, wherein
the resistance value between the first conductive film and the second conductive film varies according to a contact area therebetween.

2. The operation input device according to claim 1, further comprising a position calculation part to calculate a contact position between the first conductive film and the second conductive film based upon a potential of the second conductive film, when the first conductive film comes into contact with the second conductive film while voltage is applied to both ends of the first conductive film, which is a resistant film.

3. The operation input device according to claim 2, further comprising an operation processing part that executes processing of different operation functions depending on the resistance value between the first conductive film and the second conductive film when the films come into contact with each other.

4. The operation input device according to claim 3, further comprising a judgment part that judges whether the resistance value conforms to a first condition or a second condition when the first conductive film and the second conductive film come into contact with each other, wherein
the operation processing part executes the processing of the different operation functions depending on the conformity result of the resistance value with respect to the first condition and the second condition.

5. The operation input device according to claim 4, wherein
the operation processing part allocates one or more of the operation functions to a position corresponding to the contact position that the position calculation part calculated when it is judged that the resistance value conforms to the first condition, and executes processing of the operation function allocated to the position corresponding to the contact position when it is judged that the resistance value conforms to the second condition while the one or more operation functions are allocated.

6. The operation input device according to claim 5, further comprising a display part that is provided substantially in parallel with the first substrate, wherein
the operation processing part displays one or more display objects that correspond respectively to the one or more operation functions at a position on the display part corresponding to the contact position that the position calculation part calculated when it is judged that the resistance value conforms to the first condition.

7. The operation input device according to any of the claims from claim 4 to claim 6, wherein
the judgment part judges that the resistance value conforms to the first condition when the resistance value exceeds a predetermined first threshold value, and the judgment part judges that the resistance value conforms to the second condition when the resistance value exceeds a predetermined second threshold value that is larger than the first threshold value.

8. The operation input device according to any of the claims from claim 4 to claim 7, further comprising a vibration part that vibrates the second substrate, wherein
the operation processing part causes the vibration part to vibrate with different vibration properties depending on the conformity result of the resistance value to the first condition and the second condition.

9. The operation input device according to claim 8, wherein
the operation processing part causes the vibration part to vibrate with different vibration patterns depending on the conformity result of the resistance value to the first condition and the second condition.
